# EUROPÄISCHE PATENTSCHRIFT

(11) **EP 0 368 190 B1**
(45) Veröffentlichungstag und Bekanntmachung des Hinweises auf die Patenterteilung: **17.09.1997**
(21) Anmeldenummer: 89120470.3
(22) Anmeldetag: 06.11.1989
(51) Int. Cl.: G06F 11/00

(54) **Verfahren zur Beobachtung des zeitlichen Ablaufs eines von einem Rechnersystem ausgeführten Objektprogrammes und Beobachtungswerkzeug zur Durchführung dieses Verfahrens**
Method and apparatus for monitoring the execution time of a computer-executed object programme
Méthode et appareil d'observation du déroulement dans le temps d'un programme objet réalisé par un système d'ordinateur

(30) Priorität: 09.11.1988 CH 4161/88
(43) Veröffentlichungstag der Anmeldung: 16.05.1990
(73) Patentinhaber: ASEA BROWN BOVERI AG, 5400 Baden (CH)
(72) Erfinder: Danuser, Andreas, CH-5412 Gebenstorf (CH); Krings, Lothar, Dr., CH-5400 Baden (CH)

(56) Entgegenhaltungen:
- IBM TECHNICAL DISCLOSURE BULLETIN, Band 30, Nr. 6, November 1987, Seiten 296-297, Armonk, New York, US; "Performance trace facility"
- IDEM
- IBM TECHNICAL DISCLOSURE BULLETIN, Band 26, Nr. 11, April 1984, Seiten 6217-6220, Armonk, New York, US; C.P. GEER et al.: "Instruction stream trace"
- ELECTRONIC DESIGN, Nr. 22, 19. September 1985, Seiten 117-131, HaydenPublishing Co.,Inc., Hasbrouck Heights, New Jersey, US; B. ABLEIDINGER et al.:"Real-time analyzer furnishes high-level look at software operation"
- INFORMATIK SPEKTRUM; Band 8, Nr. 1, Seiten 37-38, Springer-Verlag, Berlin, DE; R.KLAR: "Hardware/Software-Monitoring"
- IDEM

## Beschreibung

### TECHNISCHES GEBIET

Bei der Erfindung wird ausgegangen von einem Verfahren gemäss dem Oberbegriff von Patentanspruch 1. Die Erfindung betrifft auch ein Beobachtungswerkzeug zur Durchführung dieses Verfahrens.

Ein derartiges Verfahren ist für die Leistungsbewertung, wie etwa für das Erkennen und Beseitigen von Engpässen oder für die optimale Dimensionierung von Rechnersystemen wie auch für die Analyse von Programmierfehlern der in den Rechnersystemen ausgeführten Programme von grosser Bedeutung. Hierbei darf jedoch durch die Beobachtung der zeitliche Ablauf der Programme nicht beeinträchtigt werden, Insbesondere in der Prozessleittechnik sind die ablaufenden Programme harten zeitlichen Randbedingungen unterworfen, so dass dort die Beobachtung des Programmablaufs praktisch unter Echtzeitbedingungen erfolgen sollte. Dies ist in Mehrprozessorsystemen und Rechnernetzwerken besonders problematisch.

### STAND DER TECHNIK

Ein Verfahren der eingangs genannten Art ist in IBM TECHNICAL DISCLOSURE BULLETIN, vol. 30, no. 6 (November 1987) (Armonk, NY, US) "Performance trace facility", pages 296-297, beschrieben. Bei diesem Verfahren werden zu Beginn und am Ende eines Abschnitts eines auf einem Rechnersystem ausführbaren Programms Beobachtungspunkte ins Programm eingefügt. Bei der Ausführung des Programms werden in einen Speicher des Rechnersystems Kennungen eingeschreiben, welche jeweils eindeutig der einem Beobachtungspunkt entsprechenden Programmstelle zugeordnet sind. Eine Programmhilfe ermöglicht einem Logikanalysator auf diese Kennungen zuzugreifen. Ein Anwenderprogramm übernimmt die vom Logikanalysator erfassten Kennungen und bildet hieraus unter Zufügung der zugeordneten Programmstellen und von Zeitangaben Ereignisse, aus denen sich der zeitliche Ablauf des im Rechnersystem ausgeführten Programms ergibt.

Hierbei muss die die Benutzung des Logikanalysators ermöglichende Programmhilfe an die Architekur des Rechnersystems angepasst und bei Übergang zu einem anderen Rechnersystem geändert werden. Dies ist nicht nur aufwendig, sondern setzt auch die Kenntnis der Architektur des neuen Rechnersystems voraus.

Ein Verfahren zur Beobachtung des zeitlichen Ablaufs eines von einem Rechnersystem ausgeführten Programms ist aus IBM TECHNICAL DISCLOSURE BULLETIN, vol. 26, no. 11 (April 1984) (Armonk, NY, US) C.P.Geer et al.: "Instruction stream trace", pages 6217-6220, bekannt. Bei diesem Verfahren werden an einzelnen zu analysierenden Programmstellen Instruktionen ins Programm eingefügt, welche sich auf Kennungen beziehen, die den Programmstellen zugeordnet sind und in einen Hauptspeicher des Rechnersystems eingeschrieben oder daraus ausgelesen werden können. Eine Instruktionsfluss-Erkennungsvorrichtung überwacht Adressleitungen zwischen einem Prozessor und dem Hauptspeicher des Rechnersystems und greift bei ausgewählten Adressen auf bestimmte Kennungen zu. Diese Kennungen werden einer Hardware-Einheit zugeführt und dort beispielsweise zur Aufzeichnung des Programmablaufs oder für Frequenzmessungen aufbereitet.

In ELECTRONIC DESIGN, vol. 33, no. 22 (September 1985), Seiten 117 - 131, Hayden Publishing Co. Inc., Hasbrouck Heights, New Jersey, US; B. Ableidinger et al.: "Real time analyzer furnishes high-level look at software operation" ist ein Verfahren zur Beobachtung des zeitlichen Ablaufs eines von einem Rechnersystem ausgeführten Programms beschrieben, bei dem der Prozessorbus des Rechnersystems beobachtet wird. Hierbei werden die elektrischen Signale des Prozessorbuses analysiert und daraus Rückschlüsse auf den Programmablauf gezogen.

Weitere Verfahren zur Beobachtung des zeitlichen Ablaufs eines von einem Rechnersystem ausgeführten Objektprogramms sind ferner aus Informatik-Spektrum (1985) 8, S. 37-40 bekannt. Bei vergleichsweise einfachen Rechnern kann durch Anlegen eines Messfühlers eines elektronischen Messgerätes an Hardware-Messpunkte, wie Adress-, Daten- oder Steuerleitungen, eines Objektrechners der zeitlichen Ablauf eines auf diesem Rechner ablaufenden Objektprogrammes direkt und vollständig verfolgt werden. Bei komplexen Rechnern ist dies nicht mehr möglich, da die für die Programmausführung benötigte Information nicht mehr unmittelbar über Leitungen in das zentrale Rechen- und Steuerwerk geführt wird. Bei solchen Rechnern wird für die Beobachtung des Programmablaufs im allgemeinen zusätzliche Software eingesetzt, welche abwechselnd mit dem im Rechnersystem ausgeführten Objektprogramm läuft. Hierdurch wird jedoch der zeitliche Ablauf des Objektprogramms verzögert.

### DARSTELLUNG DER ERFINDUNG

Die Erfindung, wie sie in den Patentansprüchen 1 und 5 angegeben ist, löst die Aufgabe, ein Verfahren und ein Beobachtungswerkzeug anzugeben, welche die Beobachtung des Ablaufs eines Objektprogrammes auch bei komplexen Rechnersystemen nahezu unter Echtzeitbedingungen ermöglichen. Das Verfahren und das Beobachtungswerkzeug nach der Erfindung zeichnen sich dadurch aus, dass es ohne Kenntnis von rechnerinternen Abläufen und ohne Eingriff in die Hardware eines komplexen Rechnersystems möglich ist, den Programmablauf praktisch unter Echtzeitbedingungen zu beobachten. Dies ist dadurch bedingt, dass die Ausführung eines hierzu erforderlichen Ausgabebefehls in der Grössenordnung von Mikrosekunden liegt, wohingegen die an das komplexe Rechnersystem gestellten Echtzeitanforderungen üblicherweise im Bereich von Millisekunden liegen. Heterogene, lose oder enggekoppelte Mehrrechnersysteme können problemlos analysiert werden. Zudem wird jeder Objektrechner hierbei auf dem Niveau der Sprache des Quellprogramms beobachtet, so dass der gegebenenfalls auftretende Programmierfehler rasch gefunden werden kann.

### KURZE BESCHREIBUNG DER ZEICHNUNG

Die Erfindung wird nachfolgend anhand eines in der Zeichnung dargestellten Ausführungsbeispiels näher erläutert.

Hierbei zeigt:
- Fig. 1: ein Blockschaltbild eines Rechnersystems mit zwei parallellaufenden Objektrechnern und einem je einen Adapter für jeden Objektrechner enthaltenden Beobachtungswerk nach der Erfindung,
- Fig. 2: ein Blockschaltbild eines der bei den Adapter des Beobachtungswerkzeugs gemäss Fig. 1, und
- Fig. 3: die Datenstrukturen einer von einem den beiden Objektrechner gemäss Fig. 1 an einer Schnittstelle ausgegebenen und vom Adapter gemäss Fig. 2 übernommenen Kennung und eines im Adapter gebildeten und der Kennung zugeordneten Ereignisses.

### WEG ZUR AUSFUEHRUNG DER ERFINDUNG

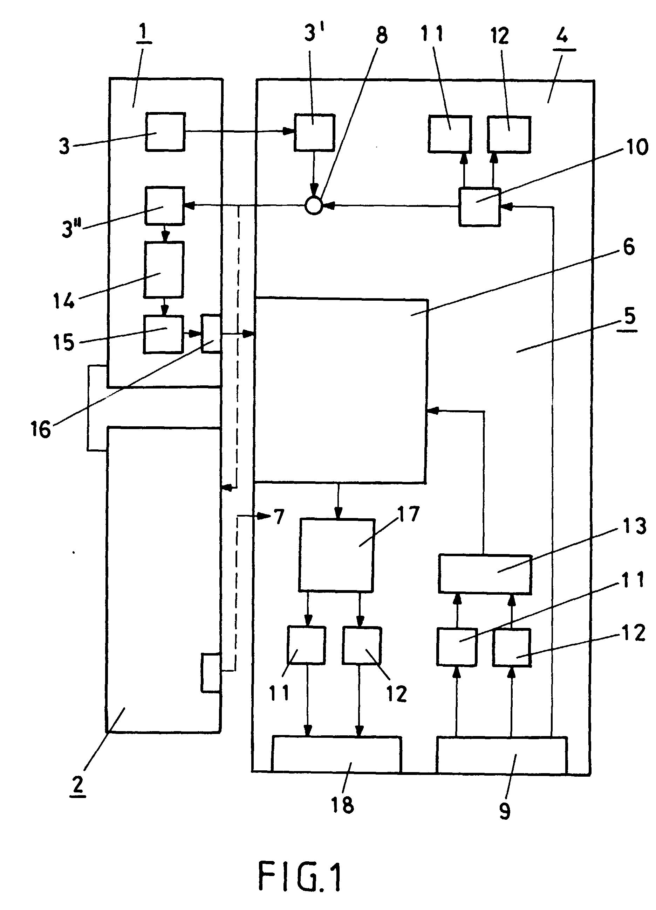

In Fig. 1 sind zwei miteinander kommunizierende Objektrechner 1, 2 eines Rechnersystems dargestellt. Beide Objektrechner 1, 2 können identisch oder unterschiedlich aufgebaut sein. Die Kommunikation kann eng oder lose sein. Statt zwei Rechnern kann das System auch drei oder mehr Rechner enthalten. In den Objektrechner 1 ist ein Quellprogramm 3 geladen, welches auf Anforderung als Kopie 3' in ein Beobachtungswerkzeug 4 eingelesen werden kann. Das Beobachtungswerkzeug 4 enthält einen die Anforderung vermittelnden Hostrechner 5 und Adapter 6 bzw. 7, welche jeweils einem der beiden Rechner 1 bzw. 2 zugeordnet sind und von denen der Adapter 7 lediglich angedeutet ist. Die im Beobachtungswerk 4 abgelegte Kopie 3' des Quellenprogramms 3 wird an einer Verknüpfungsstelle 8 modifiziert, indem an ausgewählten und eindeutig lokalisierten Stellen des Quellprogramms eindeutig gekennzeichnete Beobachtungspunkte in Form von Ausgabebefehlen eingefügt werden. Solche Beobachtungspunkte können über einen von einem Eingabegerät 9 des Hostrechners 5 aktivierten Datengenerator 10 automatisch in das Quellprogramm eingefügt werden.

Die von Datengenerator 10 gelieferten Beobachtungspunkte werden zugleich in Datenbanken 11, 12 des Beobachtungswerkzeugs 4 tabellarisch gespeichert. In der Datenbank 11 sind Daten abgelegt, welche eine eindeutige Zuordnung zwischen Beobachtungspunkt und einer bestimmten Stelle des Quellprogramms ermöglichen. In der Datenbank 12 sind Daten abgelegt, welche eine eindeutige Zuordnung zwischen einem um zusätzliche Daten des Quellprogramms, wie Variablenwerte mit entsprechendem Variablentyp und -namen, erweiterten Beobachtungspunkt und einer bestimmten Stelle des Quellprogramms ermöglichen. Zur Ermöglichung einer effektiven Arbeitsweise mit einer eingeschränkten Zahl von Daten werden vor einer Beobachtung des Programmablaufs auf dem Rechnersystem aus den Datenbanken 11 und 12 interessierende Beobachtungspunkte ausgewählt und mittels eines Steuerblocks 13 in tabellarischer Form in zwei Datenbanken gegeben, von denen sich je eine im Adapter 6 und im Adapter 7 befindet.

Das am Verknüpfungspunkt 8 gebildete modifizierte Quellprogramm 3" wird in die Objektrechner 1 und 2 eingelesen und wird in einem (nur beim Rechner 1 angedeuteten) Compiler und Linker 14 in ein von den Objektrechnern nachfolgend ausgeführtes (nur beim Rechner 1 angedeutetes) Objektprogramm 15 umgewandelt.

Während dem Ablauf des Objektprogrammes 15 wird durch Ausführung der den eingefügten Beobachtungspunkten zugeordneten Ausgabebefehle an einer Schnittstelle 16 des Objektrechners 1 pro Beobachtungspunkt jeweils eine eindeutige Kennung in der Sprache des Objektrechners 1 ausgegeben. Diese Kennung wird dem Adapter 6 des Beobachtungswerkzeugs 4 übergeben. Im Adapter 6 wird durch Vergleich mit den in dessen Datenbank gespeicherten ausgewählten Beobachtungspunkten festgestellt, ob die anstehende Kennung für die gerade durchgeführte Beobachtung von Interesse ist. Ist dies der Fall, so wird die als interessant erkannte Kennung zeitlich und die Identifikation des ausgebenden Objektrechners 1 ermöglichend markiert und nachfolgend als Ereignis in einer Datenbank 17 des Hostrechners 5 abgelegt.

Die in der Datenbank 17 abgelegten Ereignisse können off-line ausgewertet und in einem Ausgabegerät 18 des Hostrechners 5 in Form von Tabellen oder Histogrammen dargestellt werden. Hierbei stellen die in den Datenbanken 11 und 12 gespeicherten Beobachtungspunkte den Bezug des in Maschinensprache ablaufenden, zu beobachtenden Objektprogramms zu dem in der dem Benutzer vertrauten, höheren Sprache geschriebenen Quellprogramms 3 her.

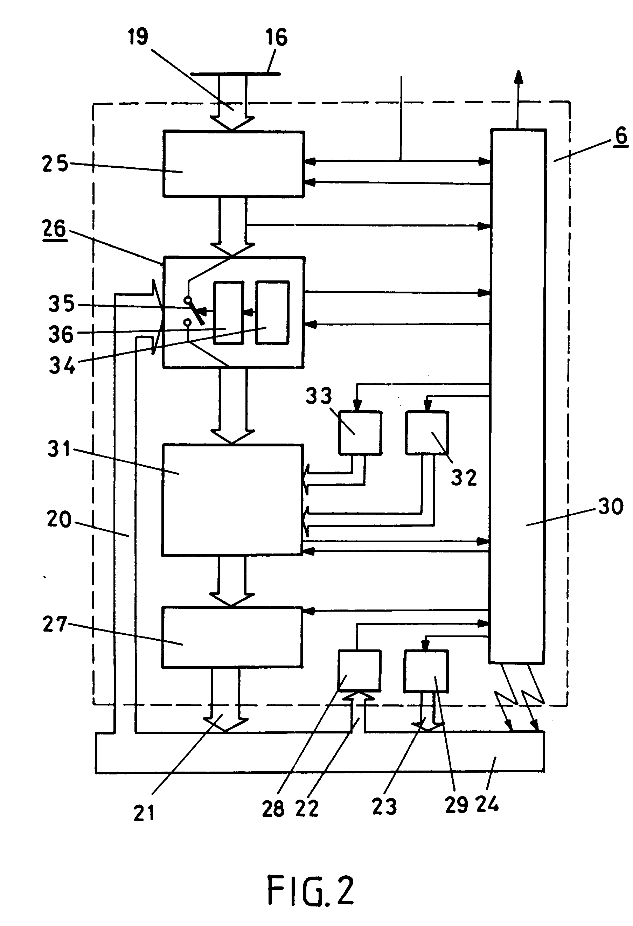

In Fig. 2 ist der zur Selektion der vom Objektrechner 1 ausgegebenen Kennungen und zur Bildung der Ereignisse bestimmte Adapter 6 in Form eines Blockschaltbildes dargestellt. Der Adapter 6 ist über einen vorzugsweise zur Uebertragung von 16-Bit-Datenworten bestimmten Bus 19 mit der Schnittstelle 16 des Objektrechners 1 und über weitere Busse 20, 21, 22 und 23 mit einem Bus 24 des Hostrechners 5 verbunden. Der Bus 19 ist mit einem Eingangsspeicher 25 des Adapters verbunden, während die Busse 20, 21, 22, 23 der Reihe nach Wirkverbindungen sicherstellen zwischen einem die Datenbank für die bei der Beobachtung interessierenden Beobachtungspunkte enthaltenden Eingangsfilter 26, einem Ausgangsspeicher 27, einem Steuerspeicher 28, einem Statusspeicher 29 und dem Hostrechner. Eine vorzugsweise aus programmierbaren Festkörper-Bausteinen aufgebaute Steuerlogik 30 ist über nicht bezeichnete Steuerleitungen sowohl mit dem Objektrechner 1 als auch mit dem Eingangsspeicher 25, dem Eingangsfilter 26, einem FIFO-Speicher 31, einem Zeitgeber 32, einem Markierer 33, dem Ausgangsspeicher 27, dem Steuerspeicher 28 und dem Statusspeicher 29 verbunden. Der Eingangsspeicher 25 wirkt über das Eingangsfilter 26 auf den FIFO-Speicher 31. Ein Ausgang des FIFO-Speichers 31 ist mit einem Eingang des Ausgangsspeichers 27 verbunden. Die Ausgänge des Zeitgebers 32 und des Markierers 33 sind mit Eingängen des FIFO-Speichers 31 verbunden. Das Eingangsfilter 26 enthält neben der die interessierenden, über die Busse 24 und 20 eingelesenen Beobachtungspunkte speichernden Datenbank 34 auch einen eine Schaltstelle 35 zwischen Filtereingang und Filterausgang betätigenden Vergleicher 36.

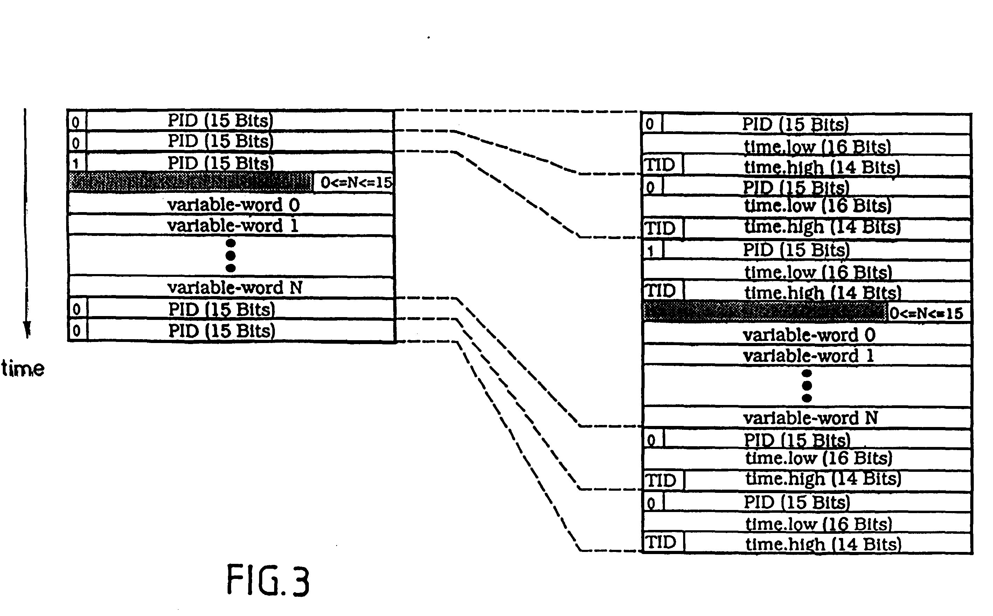

Steht nun bei Ausführung des zu beobachtenden Objektprogramms 15 an der Schnittstelle 16 eine Kennung an, so wird dies der Steuerlogik 30 gemeldet. Die Steuerlogik 30 veranlasst sodann das Einlesen der Kennung in den als Puffer wirkende Eingangsspeicher 25. Die eingelesenen Kennungen weisen die im linken Teil von Fig. 3 angegebenen Datenstrukturen auf. Die mit PID bezeichneten Kennungen sind von unten nach oben sukzessive in den Eingangsspeicher 25 eingelesen worden. Vorzugsweise das jeweils erste von 16 jeder Kennung PID zugeordnete Bit beinhaltet die Information über die Art der Kennung. Handelt es sich um eine ausschliesslich eine Stelle des beobachteten Programms lokalisierende Kennung, so beträgt der Wert des Bits jeweils 0. Wird hingegen die Kennung ergänzt mit zusätzlichen Programminformationen, wie Variablenworte 1, 2, ..., N, so beträgt der Wert des Bits ersichtlich 1. Durch diese Struktur der vom Objektrechner 1 gesendeten Kennungen erkennt die Steuerlogik, ob die Kennung lediglich aus einem 16- Bit-DAtenwort besteht oder ob noch weitere zur Kennung gehörende Datenwörter vom Objektrechner gesendet werden. Entsprechend dieser Datenstruktur wird die Steuerlogik 30 daher veranlassen, dass die Kennungen entsprechend derlinken Hälfte von Fig. 3 im Eingangsspeicher 25 abgelegt werden.

Die im Eingangsspeicher 25 abgelegte Kennungen werden von der Steuerlogik 30 sukzessiv an das Eingangsfilter 26 geführt. Durch Vergleich jeder der zugeführten Kennungen mit den in der Datenbank 34 abgelegten Kennungen im Vergleicher 36 wird festgestellt, ob die zugeführte Kennung für die durchgeführte Beobachtung von Interesse ist. Falls dies der Fall ist, wird die Schaltstelle 35 geschlossen und die anstehende Kennung in den FIFO-Speicher 31 eingelesen. Zugleich veranlasst die Steuerlogik 30 das Einlesen der vom Zeitgeber 32 gelieferten aktuellen Zeit sowie einer vom Markierer 33 abgegebene Identifikation des zugeordneten Objektrechners 1 in den FIFO-Speicher, wodurch im FIFO-Speicher ein der Kennung zugeordnetes Ereignis abgelegt ist. Führt die Kennung noch zusätzliche Informationen, wie etwa Variablenwerte, mit sich, so werden zur Bildung des Ereignisses noch diese Variablenwerte in den FIFO-Speicher 31 eingelesen. Das kann dadurch bewirkt werden, dass das die Art der Kennung festlegende und einen Wert von 1 aufweisende Bit einen Wortzähler aktiviert, welcher die Steuerlogik anweist, die von ihm gezählten Worte durch entsprechende Schaltung des Eingangsfilters 26 noch zusätzlich in den FIFO-Speicher 31 treten zu lassen.

Die im FIFO-Speicher 31 abgelegten Ereignisse weisen die in der rechten Hälfte von Fig. 3 angegebene Datenstruktur auf. Hierbei bedeuten time low, time high die Zeitangabe und TID eine die Identifikation des zugeordneten Objektrechners ermöglichende und vom Markierer 33 gelieferte Markierung.

Der Hostrechner 5 ist über den Statussignale des Adapters 6 aufnehmenden Statusspeicher 29 und den Steuersignale des Hostrechners 5 empfangenden Steuerspeicher 28 an den Adapter 6 gekoppelt. Er kann daher die im FIFO-Speicher 31 abgelegten Ereignisse chronologisch über den als Puffer wirkenden Ausgangsspeicher 27 abrufen und zur abschliessenden Auswertung in seine zur endgültigen Speicherung vorgesehene Datenbank einlesen.

Der für den Objektrechner 2 vorgesehene Adapter 7 ist entsprechend dem Adapter 6 aufgebaut. Seine Zeitgeber ist im allgemeinen synchronisiert mit dem Zeitgeber 32 des Adapters 6. Es ist auch möglich, anstelle zweier Zeitgeber lediglich einen beiden Adaptern 6, 7 gemeinsamen Zeitgeber vorzusehen. Selbstverständlich können je nach Anzahl der im Rechnersystem miteinander kommunizierender Objekt rechner auch mehr als zwei Adapter in das Beobachtungswerkzeug 4 eingebaut sein. Wichtig ist hierbei jedoch, dass alle diese Adapter zeitlich synchron laufen, damit für eine exakte Beobachtung des ablaufenden Programms eine einheitliche Zeitbasis bei der Bildung der Ereignisse besteht.

Das Verfahren nach der Erfindung ermöglicht somit die Ueberwachung des zeitlichen Ablaufs eines in einem Rechnersystem mit einem oder mehreren Objektrechnern ausgeführten Programms unter Echtzeitbedingungen. Hierbei können über die auf das Quellprogramm bezogenen Ereignisse problemlos Leistungsmessungen auch unterschiedlich aufgebauter Objektrechner des überwachten Systems durchgeführt als auch Aussagen über die Auslastung des gesamten Rechnersystems gemacht werden. Aus den Ereignissen ermittelte Ablaufanalysen können hingegen rasch die Frage klären, wie die Objektrechner des überwachten Rechnersystems zusammenwirken, so dass eine schlechte Auslastung eines Mehrrechnersystems mühelos erkannt und behoben werden kann.

## Patentansprüche

1. Verfahren zur Beobachtung des zeitlichen Ablaufs eines von einem Rechnersystem ausgeführten Objektprogramms (15), bei dem die den Ablauf des Objektprogramms (15) betreffenden Informationen von einem Beobachtungswerkzeug (4) erfasst und ausgewertet werden, wobei in das dem Objektprogramm (15) zugeordnete Quellprogramm (3) an eindeutig lokalisierten Programmstellen eindeutig erkennbare Beobachtungspunkte eingefügt werden, denen bei Ausführung des Programms jeweils eine eindeutige Kennung zugeordnet wird, wobei das Beobachtungswerkzeug (4) zumindest einen Teil der Kennungen jeweils unter Angabe eines Zeitpunkts als Ereignis speichert, und wobei zur Ermittlung des zeitlichen Ablaufs des ausgeführten Objektprogramms (15) die gespeicherten Ereignisse auf die zugeordneten Programmstellen bezogen werden, dadurch gekennzeichnet,
- dass die Beobachtungspunkte in Form von Ausgabebefehlen eingefügt werden,
- dass vor Ablauf des Objektprogramms (15) die Beobachtungspunkte und die jeweils zugeordneten Programmstellen im Beobachtungswerkzeug (4) tabellarisch gespeichert werden,
- dass bei Ablauf des Objektprogramms (15) durch Ausführung der den Beobachtungspunkten zugeordneten Ausgabebefehle an einer Schnittstelle (16) des Rechnersystems die Kennungen ausgeben und über einen Bus (19) dem Beobachtungswerkzeug (4) übergeben werden,
- dass die Übergabe jeder Kennung zur Festlegung des Zeitpunkts verwendet wird, und
- dass bei der Ermittlung des zeitlichen Ablaufs des ausgeführten Objektprogramms (15) die Ereignisse auf die im Beobachtungswerkzeug tabellarisch gespeicherten Programmstellen bezogen werden.

2. Verfahren nach Anspruch 1, dadurch gekennzeichnet, dass ein Teil der Beobachtungspunkte unter Angabe zusätzlicher Information, wie etwa dem Wert und dem Typ mindestens einer Variablen, durch Ausgabebefehle zusätzlich zu der Identifikation des Beobachtungspunktes ausgegeben und tabellarisch im Beobachtungswerkzeug (4) gespeichert werden.

3. Verfahren nach einem der Ansprüche 1 oder 2, dadurch gekennzeichnet, dass vor der Programmausführung ein zur Durchführung der Beobachtung benötigter Teil der tabellarisch im Beobachtungswerkzeug gespeicherten Beobachtungspunkte ausgewählt und in einer bei der Durchführung der Beobachtung rasch verfügbaren und die an das Beobachtungswerkzeug (4) übergebenen Kennungen selektierenden Datenbank abgelegt wird.

4. Verfahren nach einem der Ansprüche 1 bis 3 mit einem Rechnersystem mit mindestens zwei parallellaufenden Objektrechnern (1, 2) mit jeweils mindestens einer Schnittstelle (16) zur Ausgabe der den Beobachtungspunkten zugeordneten Kennungen, dadurch gekennzeichnet, dass die von den mindestens zwei Objektrechnern (1, 2) ausgegebenen Kennungen im Beobachtungswerkzeug (4) auf gemeinsamer Zeitbasis erfasst werden, und dass zu der vom jeweiligen Objektrechner (1) ausgegebenen Kennung eine diesen Objektrechner (1) bestimmende Zusatzkennung hinzugefügt wird.

5. Beobachtungswerkzeug (4) zur Durchführung des Verfahrens nach einem der Ansprüche 1 - 4 gekennzeichnet durch einen mit der mindestens einen Schnittstelle (16) verbindbaren und die Ereignisse erzeugenden Adapter (6) sowie einen über mindestens einen Datenbus (24) mit dem Adapter (6) kommunizierenden Hostrechner (5).

6. Beobachtungswerkzeug (4) nach Anspruch 5, dadurch gekennzeichnet, dass der Adapter (6) eine mit dem Hostrechner (5) kommunizierende Steuerlogik (30) aufweist sowie einen vom Hostrechner abrufbaren und mit der mindestens einen Schnittstelle (16) und der Steuerlogik (30) in Wirkverbindung stehenden FIFO-Speicher (31), in dem die im Adapter (6) erzeugten Ereignisse der Reihe nach abgelegt werden.

7. Beobachtungswerkzeug (4) nach Anspruch 6, dadurch gekennzeichnet, dass zwischen der mindestens einen Schnittstelle (16) und dem FIFO-Speicher (31) mindestens ein von der Steuerlogik (30) gesteuertes Eingangsfilter (26) angeordnet ist, welches lediglich die bei der Beobachtung interessierenden Kennungen zur Bildung der im FIFO-Speicher (31) abgelegten Ereignisse durchlässt.

8. Beobachtungswerkzeug (4) nach Anspruch 7, dadurch gekennzeichnet, dass im Eingangsfilter (26) eine Datenbank (34) vorgesehen ist, in der durch den Hostrechner (5) die bei der Beobachtung interessierenden Kennungen abgelegt sind, und dass das Eingangsfilter (26) einen Vergleicher (36) aufweist, in dem die aus der Datenbank (34) abgerufenen Kennungen mit den am Eingangsfilter (26) anstehenden Kennungen verglichen werden.

9. Beobachtungswerkzeug (4) nach einem der Ansprüche 6 bis 8, dadurch gekennzeichnet, dass bei einem Rechnersystem mit mindestens zwei parallellaufenden und jeweils mindestens eine Schnittstelle zur Ausgabe der Kennungen aufweisenden Objektrechnern (1, 2) die mindestens eine Schnittstelle (16) jeweils mit einem (6) von mindestens zwei Adaptern (6, 7) des Beobachtungswerkzeugs (4) verbunden ist.

10. Beobachtungswerkzeug (4) nach Anspruch 9, dadurch gekennzeichnet, dass die Adapter einen gemeinsamen Zeitgeber oder jeweils einen synchronisierten Zeitgeber aufweisen.

## Claims

1. Method for observing the progress in time of an object program (15), executed by a computer system, in which the information items relating to the flow of the object program (15) are detected and evaluated by an observation tool (4) , unambiguously recognizable observation points being inserted at unambiguously located program points in the source program (3) allocated to the object program (15), which points are in each case allocated an unambiguous identification during execution of the program, the observation tool (4) storing at least some of the identifications, in each case with specification of a time, as an event, and the stored events being referred to the associated program points for determining the progress in time of the object program (15) executed, characterized
- in that the observation points are inserted in the form of output commands,
- in that before the object program (15) is run, the observation points and the respectively associated program points are stored in table form in the observation tool (4),
- in that when the object program (15) is running, the identifications are output and transferred to the observation tool (4) via a bus (19) at an interface (16) of the computer system by execution of the output commands associated with the observation points,
- in that the transfer of each identification is used to establish the time, and
- in that in determining the progress in time of the object program (15) executed, the events are referred to the program points stored in table form in the observation tool.

2. Method according to Claim 1, characterized in that some of the observation points are output with specification of additional information such as, for example, the value and the type of at least one variable, by means of output commands in addition to the identification of the observation point and are stored in table form in the observation tool (4).

3. Method according to one of Claims 1 or 2, characterized in that, before the program execution, some of the observation points stored in table form in the observation tool, which are needed for carrying out the observation, are selected and are stored in a database which is rapidly available during the execution of the observation and which selects the identifications transferred to the observation tool (4).

4. Method according to one of Claims 1 to 3, comprising a computer system having at least two object computers (1, 2), which run in parallel, with in each case at least one interface (16) for outputting the identifications associated with the observation points, characterized in that the identifications, output by the at least two object computers (1, 2), are detected in the observation tool (4) on a common time base, and in that an additional identification determining this object computer (1) is added to the identification output by the respective object computer (1).

5. Observation tool (4) for carrying out the method according to one of Claims 1 - 4, characterized by an adapter (6), which can be connected to the at least one interface (16) and generates the events, and a host computer (5), which communicates with the adapter (6) via at least one data bus (24).

6. Observation tool (4) according to Claim 5, characterized in that the adapter (6) exhibits a control logic (30), which communicates with the host computer (5), and a FIFO store (31), which can be called up by the host computer and which is effectively connected to the at least one interface (16) and the control logic (30) and in which the events generated in the adapter (6) are stored successively.

7. Observation tool (4) according to Claim 6, characterized in that between the at least one interface (16) and the FIFO store (31) at least one input filter (26) controlled by the control logic (30) is disposed, which only passes the identifications of interest in the observation for forming the events stored in the FIFO store (31).

8. Observation tool (4) according to Claim 7, characterized in that in the input filter (26) a database (34) is provided in which the identifications of interest in the observation are stored by the host computer (5), and in that the input filter (26) exhibits a comparator (36) in which the identifications called up from the database (34) are compared with the identifications present at the input filter (26).

9. Observation tool (4) according to one of Claims 6 to 8, characterized in that in a computer system having at least two object computers (1, 2) which run in parallel and in each case exhibit at least one interface for outputting the identifications, the at least one interface (16) is in each case connected to one (6) of at least two adapters (6, 7) of the observation tool (4).

10. Observation tool (4) according to Claim 9, characterized in that the adapters exhibit a common timer or in each case a synchronized timer.

## Revendications

1. Procédé pour l'observation du déroulement temporel d'un programme objet (15) qui s'exécute sur un système d'ordinateurs dans lequel les informations concernant le déroulement du programme objet (15) sont saisies et exploitées par un outil d'observation (4), des points d'observation reconnaissables de manière univoque étant insérés dans le programme source (3) qui est attribué au programme objet (15) à des emplacements du programme localisés de manière univoque, une indication univoque leur étant respectivement attribuée lors de l'exécution du programme, l'outil d'observation (4) stockant au moins une partie des indications sous forme d'événement à chaque fois sur l'indication d'une heure et les événements stockés se rapportant aux emplacements de programme attribués pour établir le déroulement temporel du programme objet (15) exécuté, caractérisé en ce que
- les points d'observation sont insérés sous forme de commandes de sortie,
- les points d'observation et les emplacements du programme qui leurs sont attribués sont stockés dans l'outil d'observation (4) sous forme de tableau avant le déroulement du programme objet (15),
- l'exécution des ordres de sortie attribués aux points d'observation sur une interface (16) du système d'ordinateurs fournit les indications et les transfère par un bus (19) à l'outil d'observation (4) lors du déroulement du programme objet (15),
- le transfert de chaque indication est utilisé pour fixer l'heure et
- lors de l'établissement du déroulement temporel du programme objet (15) qui s'exécute, les événements sont rapportés à des emplacements du programme stockés sous forme de tableau dans l'outil d'observation.

2. Procédé selon la revendication 1, caractérisé en ce qu'une partie des points d'observation est fournie sur l'indication d'informations supplémentaires comme peut-être la valeur et le type d'au moins une variable par des commandes de sortie supplémentaires à l'identification du point d'observation et est stockée dans l'outil d'observation (4) sous forme de tableau.

3. Procédé selon l'une des revendications 1 ou 2, caractérisé en ce qu'une partie, nécessaire à l'exécution des observations, des points d'observation stockés dans l'outil d'observation sous forme de tableau, est sélectionnée et déposée dans une banque de donnée disponible rapidement lors de l'exécution de l'observation et sélectionnant les indications transmises à l'outil d'observation (4) avant l'exécution du programme.

4. Procédé selon l'une des revendications 1 à 3 avec un système d'ordinateurs avec au moins deux ordinateurs objets (1, 2) fonctionnant en parallèle avec respectivement au moins une interface (16) pour la sortie des indications attribuées aux points d'observation, caractérisé en ce que les indications fournies par les deux ordinateurs (1, 2) au moins sont saisies dans l'outil d'observation (4) avec une base de temps commune et en ce qu'une indication supplémentaire déterminant cet ordinateur objet (1) est ajoutée à l'indication fournie par l'ordinateur objet (1) du moment.

5. Outil d'observation (4) pour la réalisation du procédé selon l'une des revendications 1 - 4, caractérisé par un adaptateur (6) pouvant être relié à l'au moins une interface (16) et produisant les événements, ainsi que par un ordinateur hôte (5) communiquant par au moins un bus de données (24) avec l'adaptateur (6).

6. Outil d'observation (4) selon la revendication 5, caractérisé en ce que l'adaptateur (6) présente une logique de commande (30) communiquant avec l'ordinateur hôte (5) ainsi qu'un registre FIFO (31), pouvant être appelé par l'ordinateur hôte et placé en liaison active avec l'au moins une interface (16) et la logique de commande (30), dans lequel les événements générés dans l'adaptateur (6) sont déposés dans l'ordre.

7. Outil d'observation (4) selon la revendication 6, caractérisé en ce qu'au moins un filtre d'entrée (26) piloté par la logique de commande (30) est disposé entre l'au moins une interface (16) et le registre FIFO (31), lequel filtre ne laisse passer que les indications intéressantes lors de l'observation pour former les événements déposés dans le registre FIFO (31).

8. Outil d'observation (4) selon la revendication 7, caractérisé en ce qu'une banque de données (34) est prévue dans le filtre d'entrée (26), dans laquelle les indications intéressantes lors de l'observation par l'ordinateur hôte (5) sont déposées et en ce que le filtre d'entrée (26) présente un comparateur (36) dans lequel les indications appelées depuis la banque de données (34) sont comparées aux indications présentes dans le filtre d'entrée (26).

9. Outil d'observation (4) selon l'une des revendications 6 à 8, caractérisé en ce qu'avec un système d'ordinateurs comportant au moins deux ordinateurs objets (1, 2), fonctionnant en parallèle et présentant respectivement au moins une interface pour sortir les indications, l'au moins une interface(16) est reliée respectivement avec un (6) parmi au moins deux adaptateurs (6, 7) de l'outil d'observation (4).

10. Outil d'observation (4) selon la revendication 9, caractérisé en ce que les adaptateurs présentent une horloge commune ou respectivement une horloge synchronisée.
